# EUROPEAN PATENT APPLICATION

(11) **EP 4 757 433 A1**
(43) Date of publication of application: **10.06.2026**
(21) Application number: 25221039.8
(22) Date of filing: 05.12.2025
(51) Int. Cl.: H04W 52/02, H04W 48/12, H04W 88/06

(54) **SYSTEMS AND METHODS FOR NETWORK STEERING**

(30) Priority: 05.12.2024 US 202418970611
(71) Applicant: Comcast Cable Communications, LLC, Philadelphia, PA 19103 (US)
(72) Inventor: LEE, Yiu Leung, Philadelphia, 19103 (US); NANDIRAJU, Nagesh, Philadelphia, 19103 (US)
(74) Representative: V.O.

(57) **Abstract**

Systems, apparatuses, and methods are described for steering a user device to connect to one network or another network. A network identified as a service set identifier (SSID) broadcast by a wireless transceiver may be directed away from or towards a user device using adjusted transmit parameters associated with the SSID. A network identified as an SSID broadcast by a wireless transceiver may be directed towards a user device, even if the user device is connected to another network identified as another SSID that is still available.

## Description

### BACKGROUND

A user device may connect to a network broadcast by a wireless transceiver via a network identifier, for example, a service set identifier (SSID), while being located in one place. The user device may remain connected to that network as long as it is available, even though the user device roams into an area covered by a more preferred network broadcast by another wireless transceiver. This may diminish security and user experience that a user of the user device could enjoy if the user device is connected to the more preferred network.

### SUMMARY

The following summary presents a simplified summary of certain features. The summary is not an extensive overview and is not intended to identify key or critical elements.

Systems, apparatuses, and methods are described for steering a user device to connect to one network or another network. A controller may determine that a more preferred network broadcast by a wireless transceiver via a network identifier is available for a user device, which is connected to another network broadcast by another wireless transceiver via another network identifier. The controller may request these wireless transceivers to change respective broadcast/transmit parameters for broadcasting/transmitting the respective networks. Based on these changes, the user device may autonomously disconnect from the other network, and connect to the more preferred network. The controller may observe related parameters of these wireless transceivers and the user device. Based on the observation, the controller may request the other wireless transceiver to disconnect the user device so the user device may autonomously connect to the more preferred network. The controller may also authenticate the wireless transceiver for the more preferred network based on a beacon broadcast by the wireless transceiver before steering the user device to connect to the more preferred network broadcast by the wireless transceiver. A user of the user device may be protected by enhanced security and benefit from improved user experience, which are provided through the more preferred network.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows an example communication network.
FIG. 2 shows hardware elements of a computing device.
FIG. 3 shows an example network environment.
FIGs. 4A and 4B show example configuration information.
FIG. 5 shows an example network environment.
FIG. 6A shows an example network environment.
FIG. 6B shows an example network environment.
FIG. 6C shows an example network environment.
FIG. 6D shows an example network environment.
FIGs. 7A and 7B show example transmit parameters.
FIG. 8 shows example combined transmit parameters.
FIG. 9A shows an example network environment.
FIG. 9B shows an example network environment.
FIG. 10 shows an example beacon frame structure.
FIG. 11A is a flow chart showing an example method for steering a user device.
FIG. 11B is a flow chart showing an example method for steering a user device.
FIG. 12 is a flow chart showing an example method for steering a user device.
FIG. 13 is a flow chart showing an example method for steering a user device.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

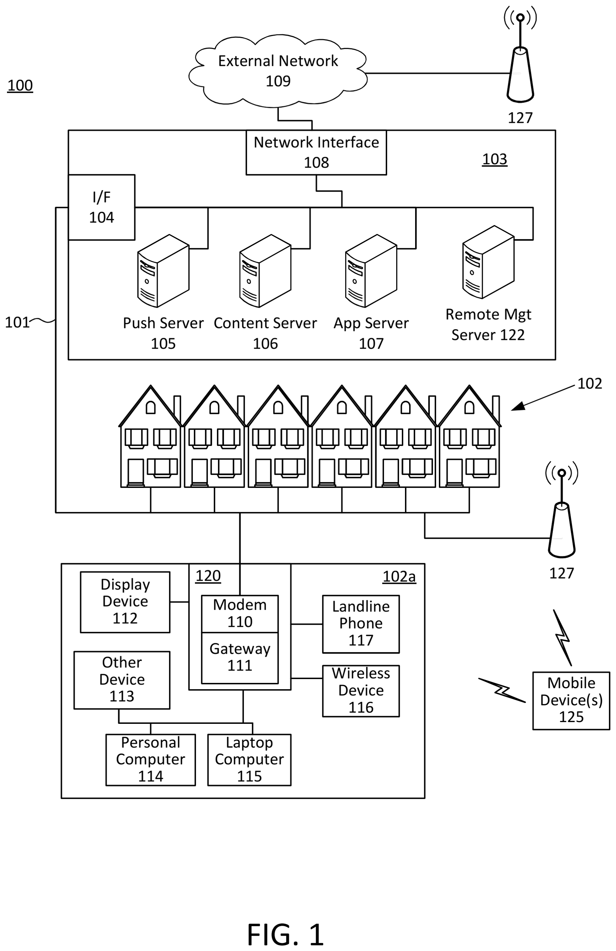

FIG. 1 shows an example communication network 100 in which features described herein may be implemented. The communication network 100 may comprise one or more information distribution networks of any type, such as, without limitation, a telephone network, a wireless network (e.g., an LTE network, a 5G network, a WiFi IEEE 802.11 network, a WiMAX network, a satellite network, and/or any other network for wireless communication), an optical fiber network, a coaxial cable network, and/or a hybrid fiber/coax distribution network. The communication network 100 may use a series of interconnected communication links 101 (e.g., coaxial cables, optical fibers, wireless links, etc.) to connect multiple premises 102 (e.g., businesses, homes, consumer dwellings, train stations, airports, etc.) to a local office 103 (e.g., a headend). The local office 103 may send downstream information signals and receive upstream information signals via the communication links 101. Each of the premises 102 may comprise devices, described below, to receive, send, and/or otherwise process those signals and information contained therein.

The communication links 101 may originate from the local office 103 and may comprise components not shown, such as splitters, filters, amplifiers, etc., to help convey signals clearly. The communication links 101 may be coupled to one or more wireless access points 127 configured to communicate with one or more mobile devices 125 via one or more wireless networks. The mobile devices 125 may comprise smart phones, tablets or laptop computers with wireless transceivers, tablets or laptop computers communicatively coupled to other devices with wireless transceivers, and/or any other type of device configured to communicate via a wireless network.

The local office 103 may comprise an interface 104. The interface 104 may comprise one or more computing devices configured to send information downstream to, and to receive information upstream from, devices communicating with the local office 103 via the communications links 101. The interface 104 may be configured to manage communications among those devices, to manage communications between those devices and backend devices such as servers 105-107 and 122, and/or to manage communications between those devices and one or more external networks 109. The interface 104 may, for example, comprise one or more routers, one or more base stations, one or more optical line terminals (OLTs), one or more termination systems (e.g., a modular cable modem termination system (M-CMTS) or an integrated cable modem termination system (I-CMTS)), one or more digital subscriber line access modules (DSLAMs), and/or any other computing device(s). The local office 103 may comprise one or more network interfaces 108 that comprise circuitry needed to communicate via the external networks 109. The external networks 109 may comprise networks of Internet devices, telephone networks, wireless networks, wired networks, fiber optic networks, and/or any other desired network. The local office 103 may also or alternatively communicate with the mobile devices 125 via the interface 108 and one or more of the external networks 109, e.g., via one or more of the wireless access points 127.

The push notification server 105 may be configured to generate push notifications to deliver information to devices in the premises 102 and/or to the mobile devices 125. The content server 106 may be configured to provide content to devices in the premises 102 and/or to the mobile devices 125. This content may comprise, for example, video, audio, text, web pages, images, files, etc. The content server 106 (or, alternatively, an authentication server) may comprise software to validate user identities and entitlements, to locate and retrieve requested content, and/or to initiate delivery (e.g., streaming) of the content. The application server 107 may be configured to offer any desired service. For example, an application server may be responsible for collecting, and generating a download of, information for electronic program guide listings. Another application server may be responsible for monitoring user viewing habits and collecting information from that monitoring for use in selecting advertisements. Yet another application server may be responsible for formatting and inserting advertisements in a video stream being transmitted to devices in the premises 102 and/or to the mobile devices 125. The local office 103 may comprise additional servers, such as the server 122 (described below), additional push, content, and/or application servers, and/or other types of servers. Although shown separately, the push server 105, the content server 106, the application server 107, the server 122, and/or other server(s) may be combined. The servers 105, 106, 107, and 122, and/or other servers, may be computing devices and may comprise memory storing data and also storing computer executable instructions that, when executed by one or more processors, cause the server(s) to perform steps described herein.

An example premises 102a may comprise an interface 120. The interface 120 may comprise circuitry used to communicate via the communication links 101. The interface 120 may comprise a modem 110, which may comprise transmitters and receivers used to communicate via the communication links 101 with the local office 103. The modem 110 may comprise, for example, a coaxial cable modem (for coaxial cable lines of the communication links 101), a fiber interface node (for fiber optic lines of the communication links 101), twisted-pair telephone modem, a wireless transceiver, and/or any other desired modem device. One modem is shown in FIG. 1, but a plurality of modems operating in parallel may be implemented within the interface 120. The interface 120 may comprise a gateway 111. The modem 110 may be connected to, or be a part of, the gateway 111. The gateway 111 may be a computing device that communicates with the modem(s) 110 to allow one or more other devices in the premises 102a to communicate with the local office 103 and/or with other devices beyond the local office 103 (e.g., via the local office 103 and the external network(s) 109). The gateway 111 may comprise a set-top box (STB), digital video recorder (DVR), a digital transport adapter (DTA), a computer server, and/or any other desired computing device.

The gateway 111 may also comprise one or more local network interfaces to communicate, via one or more local networks, with devices in the premises 102a. Such devices may comprise, e.g., display devices 112 (e.g., televisions), other devices 113 (e.g., a DVR or STB), personal computers 114, laptop computers 115, wireless devices 116 (e.g., wireless routers, wireless laptops, notebooks, tablets and netbooks, cordless phones (e.g., Digital Enhanced Cordless Telephone-DECT phones), mobile phones, mobile televisions, personal digital assistants (PDA)), landline phones 117 (e.g., Voice over Internet Protocol-VoIP phones), and any other desired devices. Example types of local networks comprise Multimedia Over Coax Alliance (MoCA) networks, Ethernet networks, networks communicating via Universal Serial Bus (USB) interfaces, wireless networks (e.g., IEEE 802.11, IEEE 802.15, Bluetooth), networks communicating via in-premises power lines, and others. The lines connecting the interface 120 with the other devices in the premises 102a may represent wired or wireless connections, as may be appropriate for the type of local network used. One or more of the devices at the premises 102a may be configured to provide wireless communications channels (e.g., IEEE 802.11 channels) to communicate with one or more of the mobile devices 125, which may be on- or off-premises.

The mobile devices 125, one or more of the devices in the premises 102a, and/or other devices may receive, store, output, and/or otherwise use assets. An asset may comprise a video, a game, one or more images, software, audio, text, webpage(s), and/or other content.

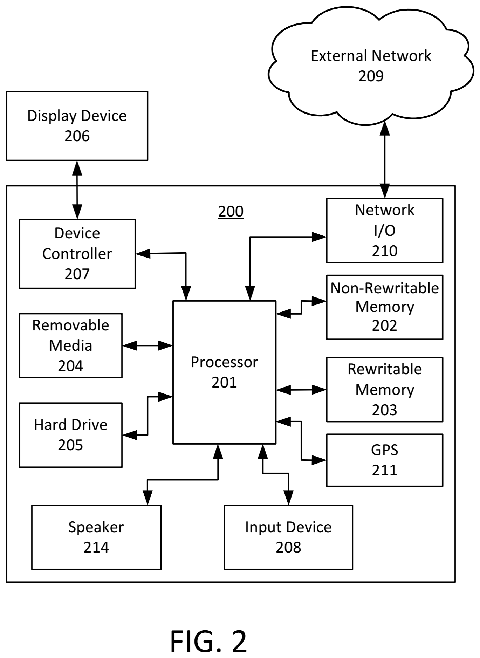

FIG. 2 shows hardware elements of a computing device 200 that may be used to implement any of the computing devices shown in FIG. 1 (e.g., the mobile devices 125, any of the devices shown in the premises 102a, any of the devices shown in the local office 103, any of the wireless access points 127, any devices with the external network 109) and any other computing devices discussed herein (e.g., controllers/system controllers, wireless transceivers described below). The computing device 200 may comprise one or more processors 201, which may execute instructions of a computer program to perform any of the functions described herein. The instructions may be stored in a non-rewritable memory 202 such as a read-only memory (ROM), a rewritable memory 203 such as random access memory (RAM) and/or flash memory, removable media 204 (e.g., a USB drive, a compact disk (CD), a digital versatile disk (DVD)), and/or in any other type of computer-readable storage medium or memory. Instructions may also be stored in an attached (or internal) hard drive 205 or other types of storage media. The computing device 200 may comprise one or more output devices, such as a display device 206 (e.g., an external television and/or other external or internal display device) and a speaker 214, and may comprise one or more output device controllers 207, such as a video processor or a controller for an infra-red or BLUETOOTH transceiver. One or more user input devices 208 may comprise a remote control, a keyboard, a mouse, a touch screen (which may be integrated with the display device 206), microphone, etc. The computing device 200 may also comprise one or more network interfaces, such as a network input/output (I/O) interface 210 (e.g., a network card) to communicate with an external network 209. The network I/O interface 210 may be a wired interface (e.g., electrical, RF (via coax), optical (via fiber)), a wireless interface, or a combination of the two. The network I/O interface 210 may comprise a modem configured to communicate via the external network 209. The external network 209 may comprise the communication links 101 discussed above, the external network 109, an in-home network, a network provider's wireless, coaxial, fiber, or hybrid fiber/coaxial distribution system (e.g., a DOCSIS network), or any other desired network. The computing device 200 may comprise a location-detecting device, such as a global positioning system (GPS) microprocessor 211, which may be configured to receive and process global positioning signals and determine, with possible assistance from an external server and antenna, a geographic position of the computing device 200.

Although FIG. 2 shows an example hardware configuration, one or more of the elements of the computing device 200 may be implemented as software or a combination of hardware and software. Modifications may be made to add, remove, combine, divide, etc. components of the computing device 200. Additionally, the elements shown in FIG. 2 may be implemented using basic computing devices and components that have been configured to perform operations such as are described herein. For example, a memory of the computing device 200 may store computer-executable instructions that, when executed by the processor 201 and/or one or more other processors of the computing device 200, cause the computing device 200 to perform one, some, or all of the operations described herein. Such memory and processor(s) may also or alternatively be implemented through one or more Integrated Circuits (ICs). An IC may be, for example, a microprocessor that accesses programming instructions or other data stored in a ROM and/or hardwired into the IC. For example, an IC may comprise an Application Specific Integrated Circuit (ASIC) having gates and/or other logic dedicated to the calculations and other operations described herein. An IC may perform some operations based on execution of programming instructions read from ROM or RAM, with other operations hardwired into gates or other logic. Further, an IC may be configured to output image data to a display buffer.

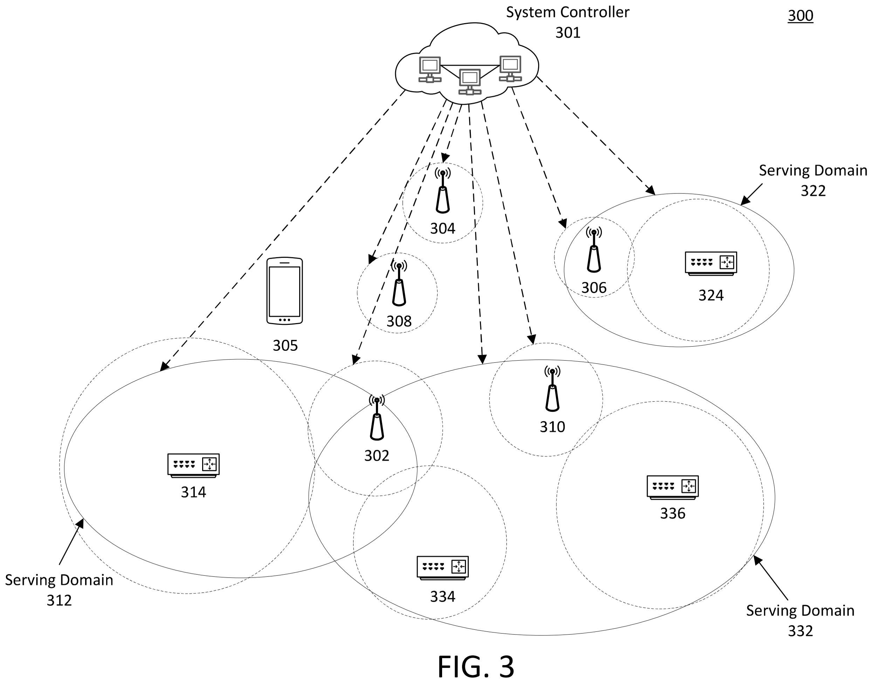

FIG. 3 shows an example network environment 300 which includes a system controller 301 and wireless transceivers 302, 304, 306, 308, and 310 that broadcast networks via SSIDs, respectively. In some examples, each of the wireless transceivers 302, 304, 306, 308, and 310 may be an access point 127 as shown in FIG. 1. Each of the wireless transceivers 302, 304, 306, 308, and 310 may broadcast more than one network via one SSID. Each of the wireless transceivers 302, 304, 306, 308, and 310 may broadcast one or more public networks via SSIDs or one or more private networks via SSIDs.

The network environment 300 may also include defined serving domains 312, 322, and 332, each of which may be an area that is covered by one or more wireless transceivers broadcasting networks via SSIDs, respectively. Each of these defined serving domains 312, 322, and 332 may be expanded by adding or removing one or more wireless transceivers that broadcast respective networks via SSIDs. For example, the defined serving domain 312 may be Alice's home and covered by a wireless transceiver 314 that at least broadcasts a network via one SSID. The defined serving domain 322 may be Bob's home and covered by a wireless transceiver 324 that at least broadcasts a network via one SSID. The defined serving domain 332 may be a commercial place (e.g., a restaurant) and covered by wireless transceivers 334 and 336 that provide at least one network via a shared SSID.

In some examples, each of the wireless transceivers 314, 324, 334, and 336 may be an access point 127 as shown in FIG. 1. Each of the wireless transceivers 314, 324, 334, and 336 may broadcast more than one network via one SSID. Each of the wireless transceivers 314, 324, 334, and 336 may broadcast one or more public networks via SSIDs or one or more private networks via SSIDs.

A user device 305 may move within the network environment 300. For example, the user device 305 may be located in a position that is covered by one of the wireless transceivers 302, 304, 306, 308, and 310 (FIG. 3 shows user device 305 outside of those regions). The user device 305 may be located in a position within one of the defined serving domains 312, 322, and 332 that is covered by one of the wireless transceivers 314, 324, 334, and 336. The user device 305 may be located in a position where a wireless transceiver's (302, 304, 306, 308, or 310) coverage area overlaps with a defined serving domain covered by a wireless transceiver (314, 324, 334, or 336).

The system controller 301 may be a computing device 200 as shown in FIG. 2. The system controller 301 may also include one or more computing devices 200 as shown in FIG. 2. In some examples, the system controller 301 may control a network coverage for the user device 305 based on information of the user device 305. For example, the system controller 301 may obtain the information of the user device 305 if the user device 305 is connected to one of the wireless transceivers (302, 304, 306, 308, 310, 314, 324, 334, or 336). In addition, the system controller 301 may control a network coverage for the user device 305 based on configuration information. The configuration information may be stored in a memory of the system controller 301, or in an external memory, or in a remote storage. The configuration information may also be changed dynamically by the system controller 301.

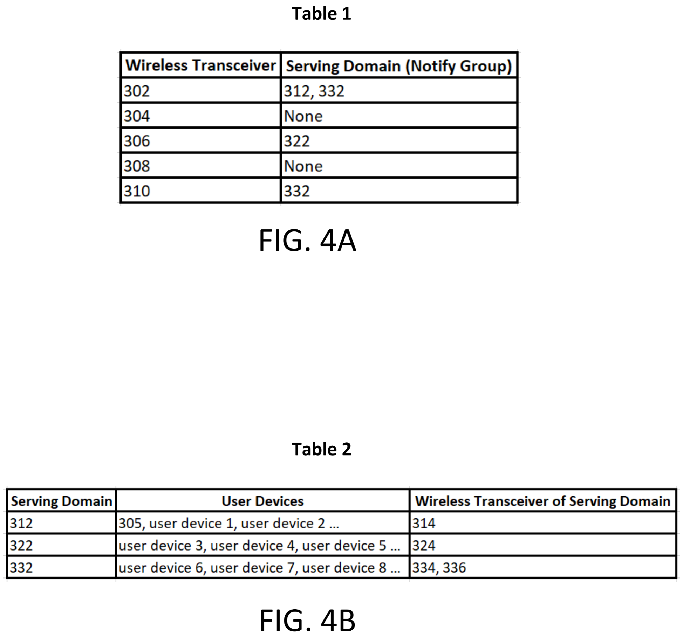

FIG. 4A shows example configuration information which includes information indicating wireless transceivers, defined serving domains covered by other wireless transceivers, and one or more user devices within the network environment 300. Table 1 of FIG. 4A may include information indicating whether a wireless transceiver's coverage area overlaps with a defined serving domain covered by another wireless transceiver. The first column of Table 1 may indicate wireless transceivers, for example, the wireless transceivers 302, 304, 306, 308, and 310. The second column of Table 1 may indicate defined serving domains that overlap with a corresponding wireless transceiver in the first column. The second column of Table 1 is named as "Serving Domain (Notify Group)," because the system controller 301 may take actions if it checks Table 1 and determines that a coverage area of a wireless transceiver, to which a user device is connected, overlaps with a defined serving domain. With this information, the system controller 301 may determine whether the user device 305 may possibly be able to receive a different network provided by the defined serving domains. The system controller 301 may further determine whether that different network is more preferred by the user device 305. For example, the system controller 301 may check further whether the user device 305 is mapped to any wireless transceiver(s) of the defined serving domain (as will be detailed further below) if it determines that a coverage area of a wireless transceiver, to which a user device is connected, overlaps with the defined serving domain. A user device being mapped to a wireless transceiver means the user device prefers connect to a network broadcast by the wireless transceiver. With this information, the system controller 301 may determine whether a different network that is provided by the defined serving domains and that the user device 305 may possibly be able to receive is a more preferred network.

The system controller 301 may use Table 1 shown in FIG. 4A to determine whether the user device 305 may possibly be able to receive a different network. The system controller 301 may use Table 2 shown in FIG. 4B to determine whether the user device 305 may prefer that different network so as to start to track movements of the user device 305 or to adjust transmit parameters used for transmitting that different network and other networks. As such, the system controller 301 is able to steer the user device 305 to connect to a more preferred network.

As shown in Table 1 of FIG. 4A, the wireless transceiver 302's coverage area may overlap with the defined serving domains 312 and 332. The wireless transceiver 306's coverage area may overlap with the defined serving domain 322. The wireless transceiver 310's coverage area may overlap with the defined serving domain 332. The system controller 301 may check further whether a user device is mapped to any wireless transceivers 314, 324, 334, or 336 of the defined serving domains 312, 322, or 332 if it determines that the user device is connected to a network provided by the wireless transceiver 302, 306, or 310. As also shown in Table 1 of FIG. 4A, the wireless transceiver 304's coverage area may not overlap with any defined serving domain(s). Similarly, the wireless transceiver 308's coverage area may not overlap with any defined serving domain(s). Accordingly, the system controller 301 may not take any actions if it determines that the user device is connected to a network provided by the wireless transceiver 304 or 308.

FIG. 4B shows example configuration information which includes information indicating how defined serving domains, wireless transceivers of the defined serving domains, and one or more user devices within the network environment 300 are related with each other. In some examples, Table 2 of FIG. 4B may include information indicating which user device(s) is mapped to a wireless transceiver(s) (314, 324, 334, or 336) of a respective defined serving domain (312, 322, or 332). The first column of Table 2 may include defined serving domains, for example, the defined serving domains 312, 322, or 332. The second column of Table 2 may include user devices that may be located within the network environment 300, including the user device 305. The third column of Table 2 may include wireless transceivers of the respective defined serving domains listed in the first column of Table 2.

For example, the system controller 301 may determine the user device 305 is located in an area where a coverage area of the wireless transceiver 302, to which the user device 305 is connected, overlaps with the defined serving domains 312 and 332 based on Table 1. The system controller 301 may further determine that the user device 305 is mapped to the wireless transceiver 314 of the defined serving domain 312 based on Table 2. The system controller 301 may also determine that the user device 305 is not mapped to any wireless transceivers 334 or 336 of the defined serving domain 332 based on Table 2. Based on these determinations, the system controller 301 understands that the user device 305 may possibly be able to receive a more preferred network provided by the wireless transceiver 314. The system controller 301 may steer the user device 305 to a network provided by the wireless transceiver 314 of the defined serving domain 312, which serves Alice's home. As will be detailed further below, this steering may be accomplished by adjusting various parameters, such as beacon transmission power or beam steering direction, of the wireless transceivers. This steering may be accomplished by tracking the user device 305's movements to check whether the user device 305 has reached an area that is sufficiently covered by the wireless transceiver 314, even though this area is still covered by the wireless transceiver 302, to which the user device 305 is connected.

As shown in Table 2 of FIG. 4B, multiple user devices may be mapped to a wireless transceiver of a defined serving domain. For example, the user device 305 may be mapped to the wireless transceiver 314 of the defined serving domain 312. As illustrated in Table 2, other user devices, such as user device 1, user device 2, etc., may also be mapped to (e.g., prefer receive service from) the wireless transceiver 314 of the defined serving domain 312. As illustrated in Table 2, user devices 3, 4, 5, etc. may be mapped to the wireless transceiver 324 of the defined serving domain 322, and user device 6, 7, 8, etc. may be mapped to the wireless transceivers 334 and/or 336 of the defined serving domain 332.

The system controller 301 may determine whether a user device, for example, the user device 305, is located within a wireless transceiver's (302, 304, 306, 308, or 310) coverage area, which overlaps with a defined serving domain (312, 322, or 332) covered by a wireless transceiver (314, 324, 334, or 336) based on Table 1 shown in FIG. 4A if the user device is connected to a network provided by a wireless transceiver (302, 304, 306, 308, or 310). The system controller 301 may determine whether the user device is mapped to a wireless transceiver of a defined serving domain based on Table 2 shown in FIG. 4B if it determines that the user device is located within a wireless transceiver's (302, 304, 306, 308, or 310) coverage area, which overlaps with a defined serving domain. The system controller 301 may start to steer the user device to connect to a different network for enhanced security and user experience. For example, the system controller 301 may steer the user device that is connected to a network provided by a wireless transceiver (302, 304, 306, 308, or 310) to a different network provided by a defined serving domain covered by a wireless transceiver (314, 324, 334, or 336).

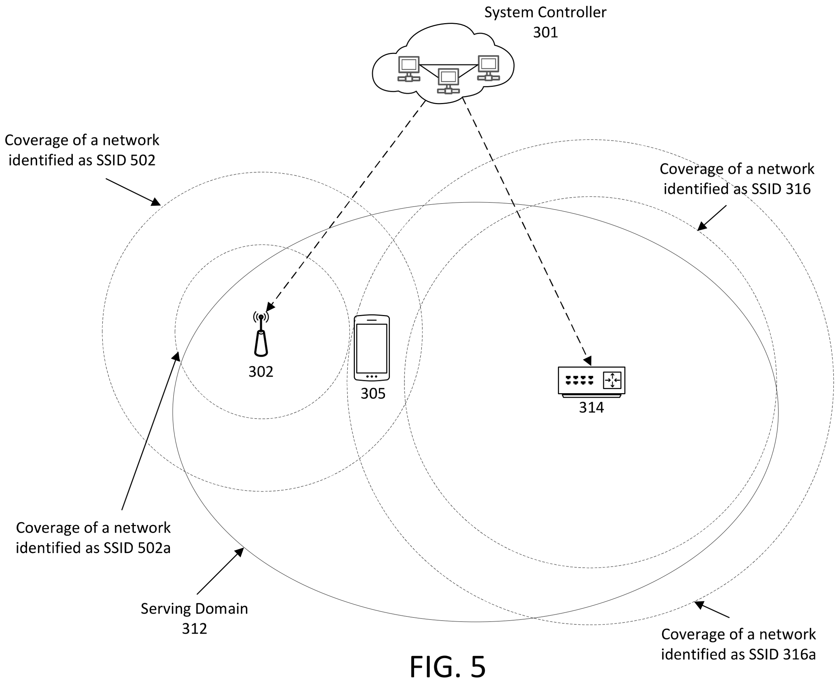

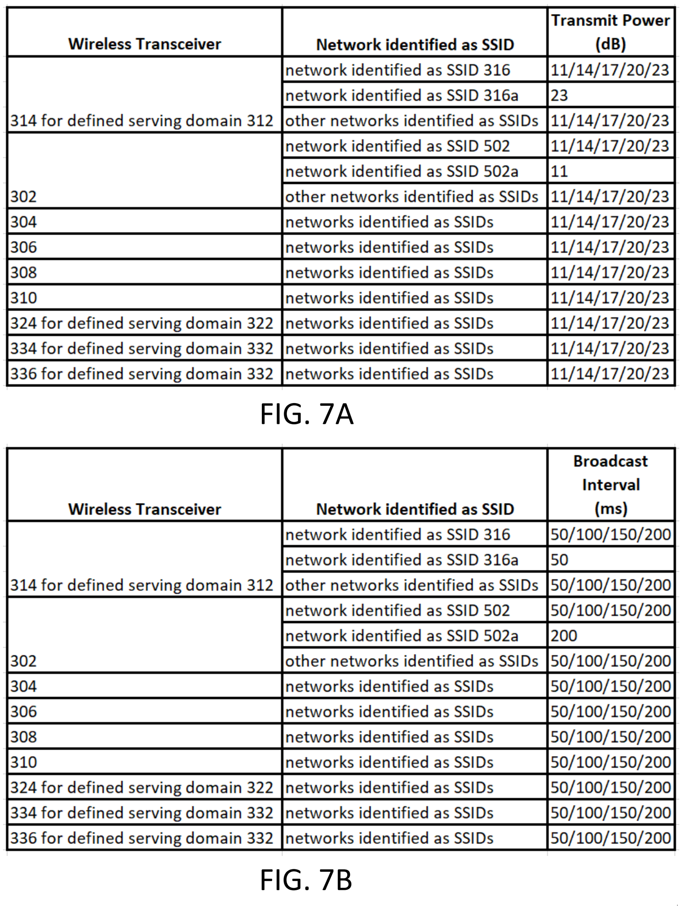

FIG. 5 shows an example network environment which includes the defined serving domain 312, the wireless transceiver 314 of the defined serving domain 312, the wireless transceiver 302, and the user device 305. The wireless transceiver 314 may broadcast a network identified as SSID 316, with normal and/or default transmit parameters (examples are discussed below with respect to FIGs. 7A and 7B), for the defined serving domain 312. A broadcast coverage of the network identified as SSID 316 is accordingly shown in FIG. 5. The wireless transceiver 302 may broadcast a network identified as SSID 502, with normal and/or default transmit parameters (e.g., power level, frequency, beam steering direction, etc.). A broadcast coverage of the network identified as SSID 502 is accordingly shown in FIG. 5. The user device 305 may be connected to the network identified as SSID 502 provided by the wireless transceiver 302. As shown in FIG. 5, the user device is located within the wireless transceiver 302's coverage area (the network identified as SSID 502), which overlaps with the defined serving domain 312 covered by the wireless transceiver 314 (the network identified as SSID 316).

The system controller 301 may obtain information of the user device 305 based on the user device 305 being connected to the network identified as SSID 502 broadcast by the wireless transceiver 302. Based on configuration information, for example, as shown in Table 1 of FIG. 4A, and also the user device 305's information, the system controller 301 may determine that the user device 305 is now located at a position that is possibly close to or is now possibly heading in an area covered by both the wireless transceiver 314 of the defined serving domain 312 and the wireless transceiver 302. For example, the system controller 301 may also request the user device 305 to report a list of nearby beacons that the user device 305 is able to detect; and/or the system controller 301 may request location information (e.g., GPS coordinates) of the user device 305's location, and compare that to a geographic map of known network coverage areas as shown in FIG. 3. The system controller 301 may also determine that the user device 305 is mapped to the wireless transceiver 314 of the defined serving domain 312 based on configuration information, for example, as shown in Table 2 of FIG. 4B. The system controller 301 may understand that the user device 305 prefers a network transmitted by the wireless transceiver 314 of the defined serving domain 312, and accordingly, may take actions in steering the user device 305 to connect to the network identified as SSID 316 broadcast by the wireless transceiver 314 from the network identified as SSID 502 broadcast by the wireless transceiver 302 for enhanced security and user experience.

For example, the system controller 301 may reduce or instruct the wireless transceiver 302 to reduce transmit power for transmitting the network identified as SSID 502, to encourage the user device 305 to disconnect from the wireless transceiver 302. Accordingly, the network identified as SSID 502 that is broadcast using the reduced transmit power is identified as SSID 502a, as shown in FIG. 5. The system controller 301 may increase or instruct the wireless transceiver 314 to increase transmit power for transmitting the network identified as SSID 316, to encourage the user device 305 to connect to the wireless transceiver 314. Accordingly, the network identified as SSID 316 that is broadcast using the increased transmit power is identified as SSID 316a, as shown in FIG. 5.

Additionally and/or alternatively, the system controller 301 may obtain location information of user device 305 and the wireless transceiver 302 (e.g., through GPS coordinates). Based on the location information, the system controller 301 may beamform or instruct the wireless transceiver 302 to beamform the transmission of the network identified as SSID 502, to be directed away from or towards the user device 305. Additionally and/or alternatively, the system controller 301 may increase or instruct the wireless transceiver 314 to increase transmit power for transmitting the network identified as SSID 316, and/or to beamform its beacon in a direction towards the user device 305. Accordingly, the system controller 301 may assist the user device 305 in switching from the network identified as SSID 502 to a different network. The system controller 301 may adjust other types of transmit parameters to assist the user device 305 in switching from one network to another network.

For example, the system controller 301 may beamform a network transmission that is directed towards a user device, with reduced transmit power and increased transmit intervals. As such, a corresponding network coverage for the user device may become weaker. Accordingly, the system controller 301 may direct the network away from the user device. The system controller 301 may beamform a network transmission that is directed to a user device, with increased transmit power and reduced transmit intervals. As such, a corresponding network coverage for the user device may become stronger. Accordingly, the system controller 301 may direct the network towards the user device.

The system controller 301 may also determine that the user device 305 should connect to a network provided by the wireless transceiver 314 and may start to steer the user device 305 based on whether a congestion level is high or low on one particular network identified as one SSID, or whether network services are free or paid on one particular network identified as one SSID, or whether network services are private or public on one particular network identified as one SSID, or a combination thereof. The system controller 301 may also determine based on a combination of one or more foregoing criteria and the configuration information described herein.

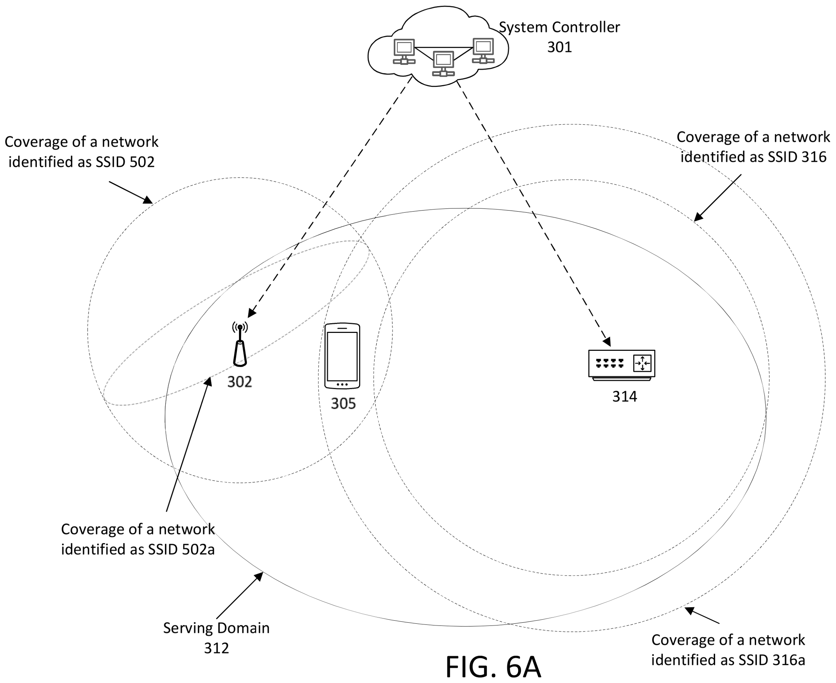

FIG. 6A shows an example network environment where the system controller 301 may control wireless transceivers to steer a user device to connect to one network or another network. The system controller 301 may request the wireless transceiver 314 to increase its transmit power, and further, to broadcast a network identified as SSID 316 using the increased transmit power. Accordingly, the network that is broadcast using the increased transmit power is identified as SSID 316a. As shown in FIG. 6A, a broadcast coverage of the network identified as SSID 316a may be enlarged. For example, a broadcast coverage of the network identified as SSID 316a may be larger than a broadcast coverage of the network identified as SSID 316. The system controller 301 may request the wireless transceiver 302 to send a network identified as SSID 502 that is beamformed away from the user device 305. Accordingly, the beamformed network is identified as SSID 502a. For example, the beamformed network identified as SSID 502a is directed away from the user device 305. For example, the user device 305 is not within a coverage of the beamformed network identified as SSID 502a, as shown in FIG. 6A.

As shown in FIG. 6A, with the respective changed/adjusted transmit parameters (e.g., transmit power and beamforming direction), the beamformed transmission of the network identified as SSID 502a may not be sufficient (e.g., a corresponding coverage is directed away) for the user device 305, and the broadcast of the network identified as SSID 316a may get stronger (e.g., a corresponding coverage is larger) for the user device 305. Based on these network conditions, the user device 305 may autonomously decide to disconnect from the network identified as SSID 502a. The user device 305 may scan beacons and choose to connect to an available and strong network, for example, the stronger network identified as SSID 316a. With a switch of networks, the user device 305 may enjoy better security and access local services provided through the network identified as SSID 316a.

As such, the system controller 301 may complete steering the user device 305 to connect to a network identified as SSID 316a. In some examples, the system controller 301 may request the wireless transceiver 314 to change its transmit power back to the normal/default level (e.g., prior to the steering). A broadcast coverage of the network identified as SSID 316a may be back to the original level, such as a broadcast coverage of the network identified as SSID 316 shown in FIG. 6A. The system controller 301 may also request the wireless transceiver 302 not to beamform the transmission of the network identified as SSID 502a directed away from the user device 305. A broadcast coverage of the network identified as SSID 502a may be back to the original state, such as a broadcast coverage of the network identified as SSID 502 shown in FIG. 6A.

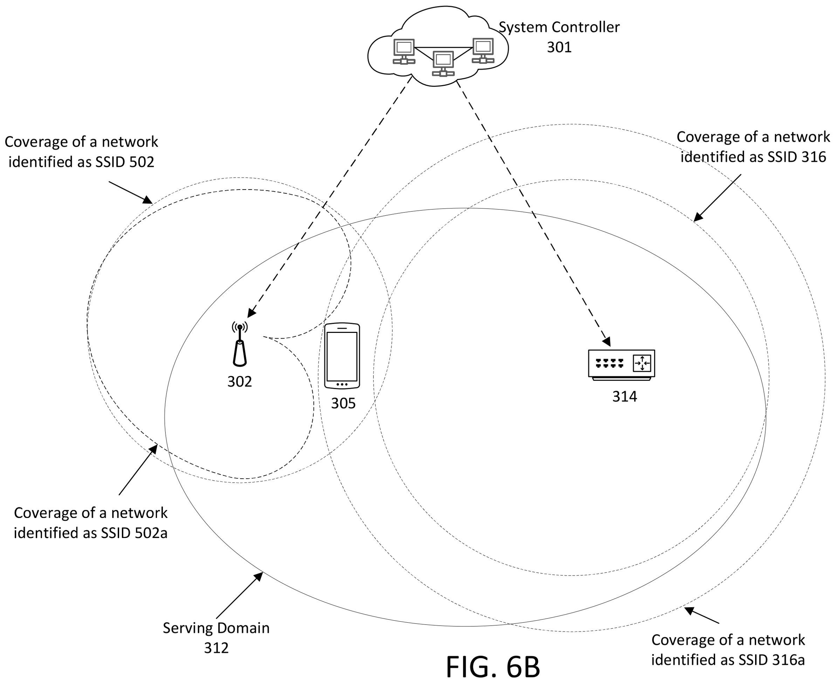

FIG. 6B shows an example network environment where the system controller 301 may control wireless transceivers to steer a user device to connect to one network or another network. The system controller 301 may request the wireless transceiver 314 to increase its transmit power, and further, to broadcast a network identified as SSID 316 using the increased transmit power. Accordingly, the network that is broadcast using the increased transmit power is identified as SSID 316a. As shown in FIG. 6B, a broadcast coverage of the network identified as SSID 316a may be enlarged. For example, a broadcast coverage of the network identified as SSID 316a may be larger than a broadcast coverage of the network identified as SSID 316. The system controller 301 may also request the wireless transceiver 302 to reduce its transmit power, and further, to send a network identified as SSID 502 that is beamformed towards the user device 305, using the reduced transmit power. Accordingly, the network that is sent using the reduced transmit power and whose transmission is beamformed is identified as SSID 502a. For example, the beamformed transmission of the network identified as SSID 502a, using the reduced transmit power, is targeted at the user device 305. For example, the user device 305 is not within a coverage of the beamformed network identified as SSID 502a, as shown in FIG. 6B.

As shown in FIG. 6B, with the respective changed/adjusted transmit parameters (e.g., transmit power and beamforming direction), the beamformed transmission of the network identified as SSID 502a may not be sufficient (e.g., a corresponding coverage directed to the user device 305 is smaller) for the user device 305, and the broadcast of the network identified as SSID 316a may get stronger (e.g., a corresponding coverage is larger) for the user device 305. Based on these network conditions, the user device 305 may autonomously decide to disconnect from the network identified as SSID 502a. The user device 305 may scan beacons and choose to connect to an available and strong network, for example, the stronger network identified as SSID 316a. With a switch of networks, the user device 305 may enjoy better security and access local services provided through the network identified as SSID 316a.

As such, the system controller 301 may complete steering the user device 305 to connect to a network identified as SSID 316a. In some examples, the system controller 301 may request the wireless transceiver 314 to change its transmit power back to the normal/default level (e.g., prior to the steering). A broadcast coverage of the network identified as SSID 316a may be back to the original level, such as a broadcast coverage of the network identified as SSID 316 shown in FIG. 6B. The system controller 301 may also request the wireless transceiver 302 to change its transmit power back to the normal/default level, and further, not to beamform the transmission of the network identified as SSID 502a directed towards the user device 305. A broadcast coverage of the network identified as SSID 502a may be back to the original level, such as a broadcast coverage of the network identified as SSID 502 shown in FIG. 6B.

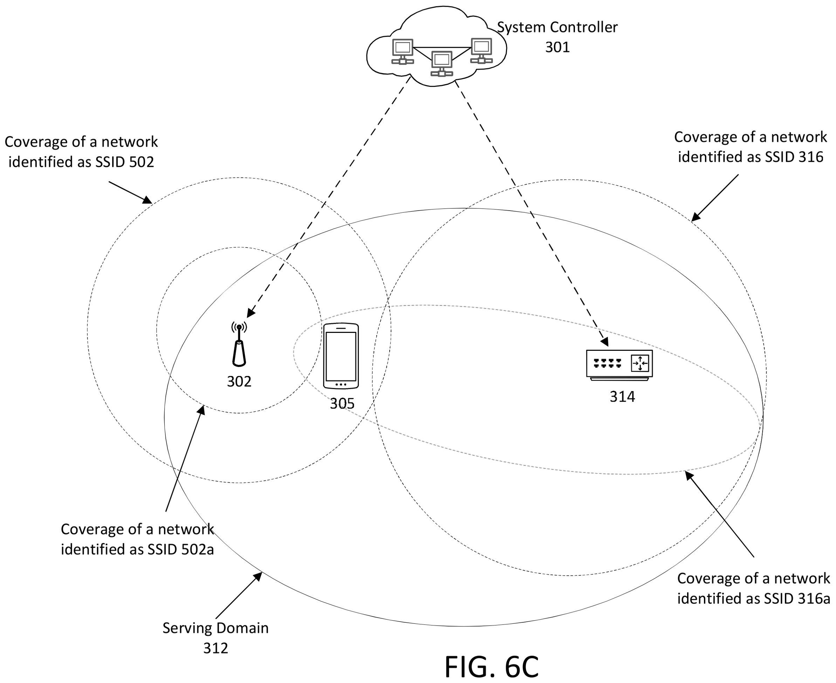

FIG. 6C shows an example network environment where the system controller 301 may control wireless transceivers to steer a user device to connect to one network or another network. The system controller 301 may request the wireless transceiver 314 to increase its transmit power, and further, to send a network identified as SSID 316 that is beamformed towards the user device 305, using the increased transmit power. Accordingly, the network that is sent using the increased transmit power and whose transmission is beamformed is identified as SSID 316a. For example, the beamformed transmission of the network identified as SSID 316a is targeted at the user device 305. For example, a coverage of the beamformed the network identified as SSID 316a towards the user device 305, as shown in FIG. 6C, may be larger than a broadcast coverage of the network identified as SSID 316. The system controller 301 may also request the wireless transceiver 302 to reduce its transmit power, and to broadcast a network identified as SSID 502 using the reduced transmit power. Accordingly, the network that is broadcast using the reduced transmit power is identified as SSID 502a. As shown in FIG. 6C, a broadcast coverage of the network identified as SSID 502a may be reduced. For example, a broadcast coverage of the network identified as SSID 502a may be smaller than a broadcast coverage of the network identified as SSID 502.

As shown in FIG. 6C, with the respective changed/adjusted transmit parameters (e.g., transmit power and beamforming direction), the broadcast of the network identified as SSID 502a may get weaker (e.g., a corresponding coverage is smaller) for the user device 305, and the beamformed transmission of the network identified as SSID 316a may get stronger (e.g., a corresponding coverage is larger) for the user device 305. Based on these network conditions, the user device 305 may autonomously decide to disconnect from the weaker network identified as SSID 502a. The user device 305 may scan beacons and choose to connect to an available and strong network, for example, the stronger network identified as SSID 316a. With a switch of networks, the user device 305 may enjoy better security and access local services provided through the network identified as SSID 316a.

As such, the system controller 301 may complete steering the user device 305 to connect to a network identified as SSID 316a. In some examples, the system controller 301 may request the wireless transceiver 314 to change its transmit power back to the normal/default level (e.g., prior to the steering), and further, not to beamform the transmission of the network identified as SSID 316a directed towards the user device 305. A broadcast coverage of the network identified as SSID 316a may be back to the original level, such as a broadcast coverage of the network identified as SSID 316 shown in FIG. 6C. The system controller 301 may also request the wireless transceiver 302 to change its transmit power back to the normal/default level (e.g., prior to the steering). A broadcast coverage of the network identified as SSID 502a may be back to the original level, such as a broadcast coverage of the network identified as SSID 502 shown in FIG. 6C.

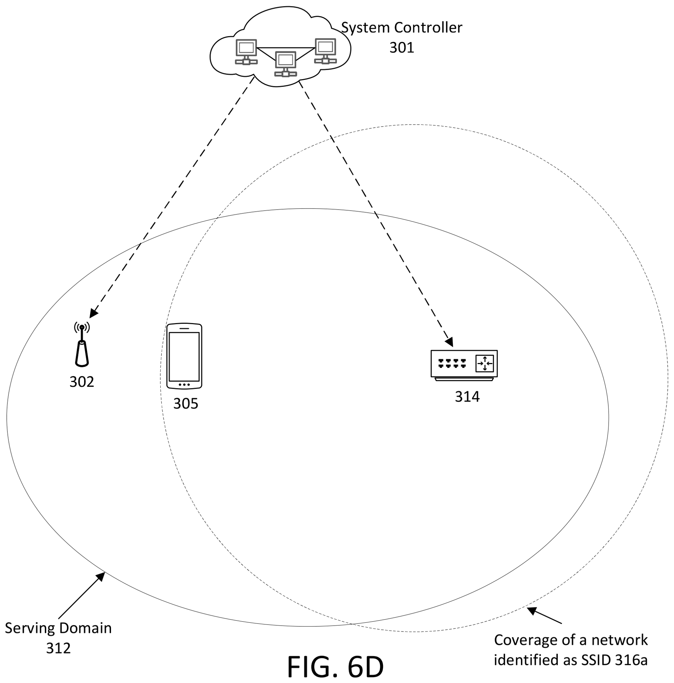

These transmit parameters may include transmit power and beamforming direction as described herein. These transmit parameters may also include transmit intervals. For example, if a transmit interval is reduced, a transmission of a network identified as one SSID may get stronger; or if a transmit interval is increased, a transmission of a network identified as one SSID may get weaker. For example, the system controller 301 may request the wireless transceiver 302 to broadcast the network identified as SSID 502a using increased transmit intervals. The system controller 301 may also request the wireless transceiver 314 to broadcast the network identified as SSID 316a using reduced transmit intervals. At some point, the network identified as SSID 316a is broadcast by the wireless transceiver 314 and the network identified as SSID 502a is not broadcast by the wireless transceiver 302, as shown in FIG. 6D. This is because the network identified as SSID 316a is broadcast more frequently than the network identified as SSID 502a. Accordingly, the broadcast of the network identified as SSID 502a may get weaker, and the broadcast of the network identified as SSID 316a may get stronger. Additionally and/or alternatively, these transmit parameters may also include other types of parameters for broadcast/transmission of networks identified as SSIDs.

These transmit parameters may be used in a combined form. As shown in FIGs. 6A-6C, a wireless transceiver may transmit a network using adjusted transmit power and an adjusted beamforming direction. A wireless transceiver may transmit a network using adjusted transmit power and/or an adjusted beamforming direction and/or an adjusted transmit interval and/or any other adjusted transmit parameters.

FIG. 7A shows example transmit parameters which include broadcast/transmit power. The system controller 301 may request each wireless transceiver to change/adjust broadcast/transmit power of respective network broadcast/transmissions. As listed in the table of FIG. 7A, for each wireless transceiver, such as the wireless transceiver 314 of the defined serving domain 312 and the wireless transceiver 302, broadcast/transmit power of respective network broadcast/transmission may be chosen from a power setting of 11 dB, 14 dB, 17 dB, 20 dB, or 23 dB.

For example, according to the table shown in FIG. 7A, the system controller 301 may request the wireless transceiver 314 of the defined serving domain 312 (e.g., Alice's home) to increase transmit power of the network identified as SSID 316 up to a power setting of 23 dB, from a power setting of 17 dB that is generally used by a wireless transceiver. The system controller 301 may request the wireless transceiver 302 to reduce transmit power of the network identified as SSID 502 to a power setting of 11 dB, from a power setting of 17 dB that is generally used by a wireless transceiver. Accordingly, the broadcast of the network identified as SSID 502 (e.g., a broadcast of the network identified as SSID 502a as shown in FIG. 7A) may get weaker and the broadcast of the network identified as SSID 316 (e.g., a broadcast of the network identified as SSID 316a as shown in FIG. 7A) may get stronger, as shown in FIG. 5.

FIG. 7B shows example transmit parameters which include broadcast/transmit intervals. The system controller 301 may request each wireless transceiver to change/adjust broadcast/transmit intervals of respective network broadcast/transmissions. As listed in the table of FIG. 7B, for each wireless transceiver, such as the wireless transceiver 314 of the defined serving domain 312 and the wireless transceiver 302, broadcast/transmit intervals of respective network broadcast/transmission may be chosen from a value of 50 ms, 100 ms, 150 ms, or 200 ms.

For example, according to the table shown in FIG. 7B, the system controller 301 may request the wireless transceiver 314 of the defined serving domain 312 (e.g., Alice's home) to reduce a transmit interval of the network identified as SSID 316 to 50 ms, from a value of 100 ms that is generally used by a wireless transceiver. As such, a time between the broadcast of the network identified as SSID 316 is reduced. The system controller 301 may request the wireless transceiver 302 to increase a transmit interval of the network identified as SSID 502 up to 200 ms, from a value of 100 ms that is generally used by a wireless transceiver. As such, a time between the broadcast of the network identified as SSID 502 is increased. Accordingly, the broadcast of the network identified as SSID 502 (e.g., a broadcast of the network identified as SSID 502a as shown in FIG. 7B) may get weaker and the broadcast of the network identified as SSID 316 (e.g., a broadcast of the network identified as SSID 316a as shown in FIG. 7B) may get stronger.

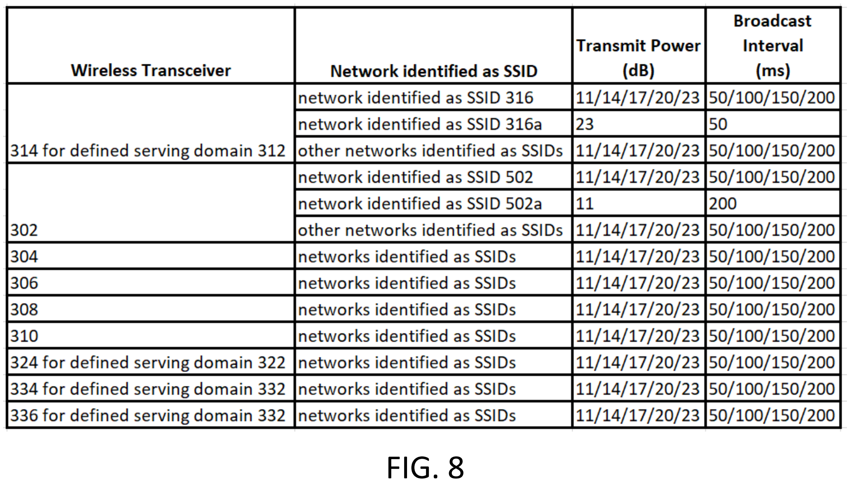

FIG. 8 shows example combined transmit parameters which include transmit power and transmit intervals. The system controller 301 may request each wireless transceiver to change/adjust broadcast/transmit power and intervals of respective network broadcast/transmissions. As listed in the table of FIG. 8, for each wireless transceiver, such as the wireless transceiver 314 of the defined serving domain 312 and the wireless transceiver 302, broadcast/transmit power and intervals of respective network broadcast/transmission may be chosen from a power setting of 11 dB, 14 dB, 17 dB, 20 dB, or 23 dB, and from a value of 50 ms, 100 ms, 150 ms, or 200 ms.

For example, according to the table shown in FIG. 8, the system controller 301 may request the wireless transceiver 314 of the defined serving domain 312 (e.g., Alice's home) to increase transmit power of the network identified as SSID 316 up to a power setting of 23 dB (e.g., the network is identified as SSID 316a as shown in FIG. 8). The system controller 301 may further request the wireless transceiver 314 to reduce a transmit interval of the broadcast of the network identified as SSID 316 to 50 ms (e.g., the network is identified as SSID 316a as shown in FIG. 8).

For example, the system controller 301 may request the wireless transceiver 302 to reduce transmit power of the network identified as SSID 502 to a power setting of 11 dB (e.g., the network is identified as SSID 502a as shown in FIG. 8). The system controller 301 may further request the wireless transceiver 302 to increase a transmit interval of the network identified as SSID 502 up to 200 ms (e.g., the network is identified as SSID 502a as shown in FIG. 8). Accordingly, the broadcast of the network identified as SSID 502 (e.g., a broadcast of the network identified as SSID 502a) may get weaker and the broadcast of the network identified as SSID 316 (e.g., a broadcast of the network identified as SSID 316a) may get stronger within a short time duration.

In additional to transmit power and transmit intervals, the system controller 301 may adjust other transmit parameters to complete steering the user device 305 to connect to a network identified as SSID 316a. In some examples, the system controller 301 may request the wireless transceiver 314 to alter the Orthogonal Frequency-Division Multiple Access (OFDMA) algorithm to signal the user device 305 (e.g., prior to the steering). The system controller 301 may request the wireless transceiver 302 to allocate fewer timeslots to the user device 305 to reduce the usable air bandwidth. As such, the user device 305 may experience degraded connectivity and algorithmically switch to the wireless transceiver 314. The system controller 301 may request the wireless transceiver 302 to continue giving normal timeslots for other user devices within the network environment 300. As such, the wireless transceiver 302 may only target the user device 305 to reduce time slots.

In addition to transmit power and transmit intervals as shown in FIG. 7A and FIG. 7B, the transmit parameters for each wireless transceiver may include beamformed transmissions that are directed away from or towards a particular user device. The transmit parameter may also include other types of parameters. These transmit parameters may be used, in a combined form, for network broadcast and/or beamformed network transmissions directed away from or towards a user device, as shown in FIG. 8.

In some examples, the transmit parameters, such as listed in the tables shown in FIG. 7A, FIG. 7B, and FIG. 8, may be stored in the system controller 301. The transmit parameters may be stored in a remote storage and downloaded by the system controller 301. The transmit parameters may also be changed dynamically by the system controller 301.

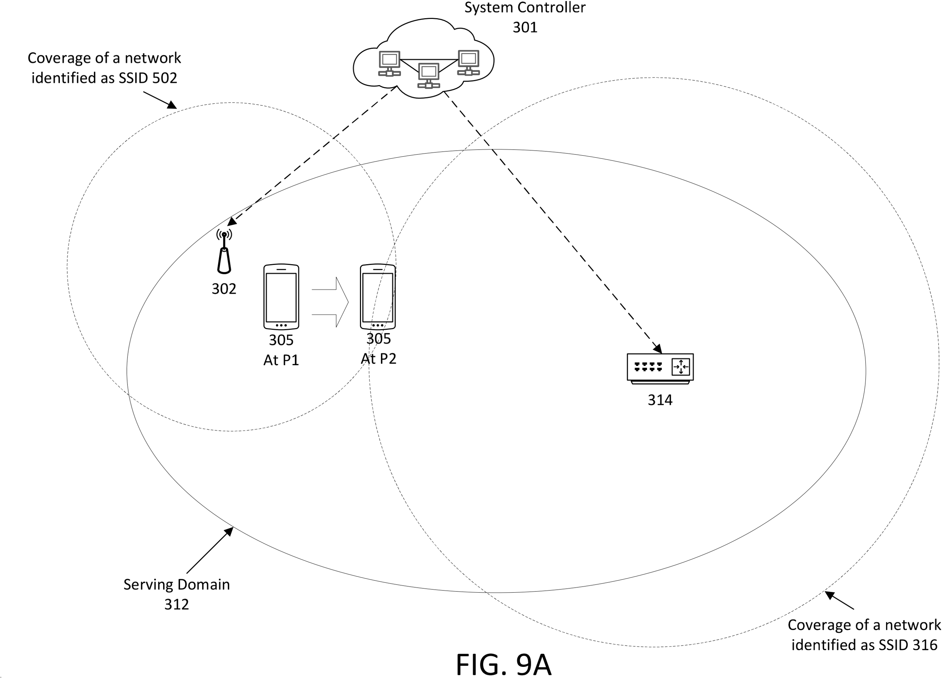

FIG. 9A shows an example network environment which includes the defined serving domain 312, the wireless transceiver 314 of the defined serving domain 312, the wireless transceiver 302, and the user device 305. The user device 305 is connected to the network identified as SSID 502 broadcast by the wireless transceiver 302. As described with reference to FIG. 5, the system controller 301 may determine that the user device 305 is now located within the wireless transceiver 302's coverage area, which overlaps with the defined serving domain 312 covered by the wireless transceiver 314. The system controller 301 may also determine that the user device 305 is mapped to the wireless transceiver 314. Based on these determinations, the system understands that the user device 305 may prefer connect to a different network broadcast by the wireless transceiver 314 of the defined serving domain 312, and the user device 305 may possibly be able to receive a different network broadcast by the wireless transceiver 314. The system controller 301 may take actions in steering the user device 305 to connect to a different network broadcast by the wireless transceiver 314.

The system controller 301 may observe/measure related parameters of the wireless transceiver 314, the wireless transceiver 302, and the user device 305. Based on the observation/measurement, the system controller 301 may determine whether the broadcast coverage of the network identified as SSID 316 is sufficient for the user device 305. For example, the system controller 301 may conduct the following observation/measurement with respect to the wireless transceiver 302 and the wireless transceiver 314 for every 3 keepalive packets sent from the user device 305.

The system controller 301 may measure the user device 305's signal-to-noise ratio (SNR) with respect to the wireless transceiver 302 at a previous position (P1 as shown in FIG. 9A), which is represented as X0. The system controller 301 may measure the user device 305's SNR with respect to the wireless transceiver 302 at a current position (P2 as shown in FIG. 9A), which is represented as X1. The system controller 301 may determine the user device 305 is moving away from the wireless transceiver 302 if an absolute value of a result of X0 minus X1 is larger than an SNR threshold and X0 is larger than X1.

The wireless transceiver 302 or the wireless transceiver 314 may (e.g., under the system controller 301's instruction) perform beamforming into different directions to assess directional movements of the user device 305. The system controller 301 may measure the user device 305's directional movements based on its responses (e.g., its corresponding beams) to the beamforming performed by the wireless transceiver 302 or the wireless transceiver 314 at the previous position (P1 as shown in FIG. 9A), which is represented as K0. The system controller 301 may measure the user device 305's directional movements based on its response (e.g., its corresponding beams) to the beamforming performed by the wireless transceiver 302 or the wireless transceiver 314 at the current position (P2 as shown in FIG. 9A), which is represented as K. For example, the wireless transceiver 302 may transmit the beamforming direction of the user device 305 at K0 and K to the system controller 301. The system controller 301 may use the user device 305's direction data and the wireless transceiver 314's location data in respect to the wireless transceiver 302, to determine that the user device 305 is walking towards the wireless transceiver 314. The system controller 301 may calculate a vector value V of a sum of K0 and K so as to determine whether the user device 305 is heading towards the wireless transceiver 314. The system controller 301 may measure the user device 305's SNR with respect to the vector value V, which is represented as A, if it determines the user device 305 is heading towards the wireless transceiver 314. The system controller may determine the broadcast coverage of the network identified as SSID 316 broadcast by the wireless transceiver 314 is sufficient if A is larger than a threshold for switching wireless transceivers.

An algorithm for the observation/measurement described herein may be as follows:

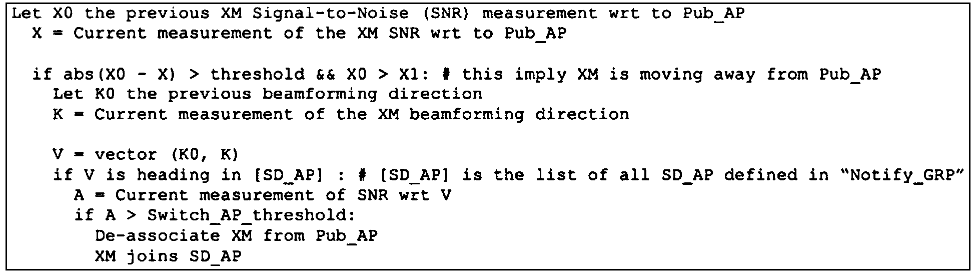

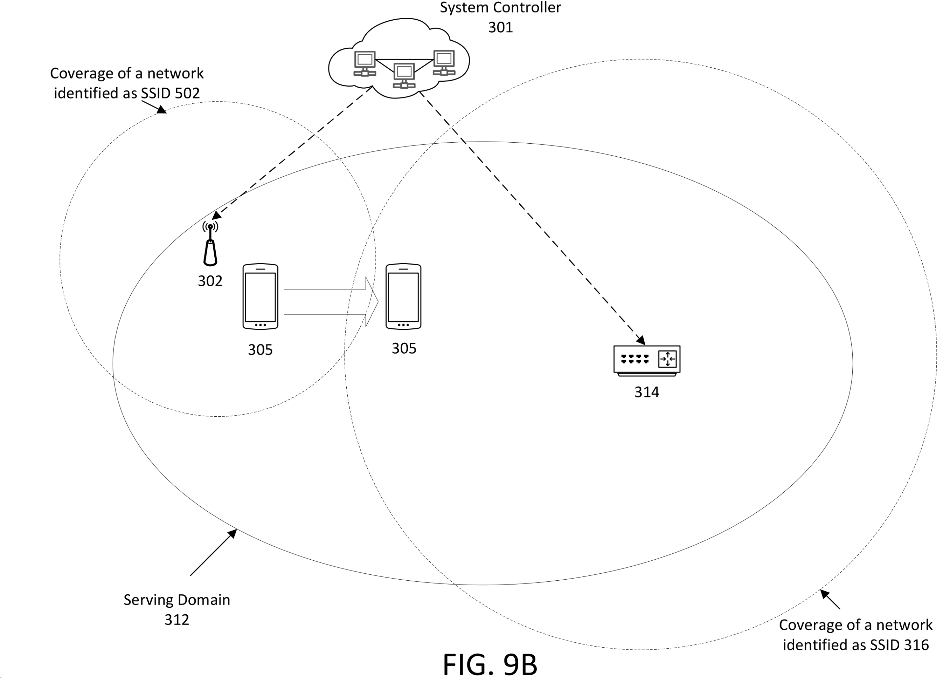

The system controller 301 may request the wireless transceiver 302 to disconnect/de-associate the user device 305 if it determines that the user device 305 arrives in an area where the broadcast coverage of the network identified as SSID 316 broadcast by the wireless transceiver 314 is sufficient, as shown in FIG. 9B. The user device 305 may scan a beacon broadcast by the wireless transceiver 314 and autonomously decide to connect to the network identified as SSID 316 broadcast by the wireless transceiver 314 if it is disconnected from the network identified as SSID 502 broadcast by the wireless transceiver 302. The system controller 301 may keep observing/measuring the related parameters if it determines that the related parameters have not met these thresholds used for the algorithm (e.g., the user device 305 has not reached in an area where the broadcast coverage of the network identified as SSID 316 broadcast by the wireless transceiver 314 is sufficient). The system controller 301 may also check whether there is another more preferred wireless transceiver of another defined serving domain that may be available for the user device 305 if it determines that the user device 305 has not reached an area sufficiently covered by the wireless transceiver 314.

The system controller 301 may determine that the user device 305 is located within the wireless transceiver 302's coverage area, which overlaps with the defined serving domain 312 covered by the wireless transceiver 314 based on Table 1 of FIG. 4A. The system controller 301 may steer the user device 305 to connect to a network broadcast by the wireless transceiver 314, to which the user device 305 is mapped, based on Table 2 of FIG. 4B. As such, the user device 305 may have accesses to more secure and more services provided by the network broadcast by the wireless transceiver 314.

As shown in the algorithm, the related parameters observed/measured by the system controller 301 may include the user device 305's SNRs with respect to the wireless transceiver 302 at various positions. For example, these various positions may include a position where a defined serving domain covered by a wireless transceiver (314) does not overlap with a wireless transceiver's (302) coverage area (e.g., the previous position, P1 as shown in FIG. 9A), and/or a position where a defined serving domain covered by a wireless transceiver (314) overlaps with a wireless transceiver's (302) coverage area (e.g., the current position, P2 as shown in FIG. 9A). The related parameters may include the user device 305's response to directional beamforming performed by these wireless transceivers at the various positions. With these parameters, the system controller 301 may track movements of the user device 305, and accordingly, determine whether to steer the user device 305 to a different network broadcast by a different wireless transceiver.

The one or more thresholds may include thresholds for various SNRs. The one or more thresholds may include thresholds for various beamforming directions. The one or more thresholds may include thresholds for various vector directions that indicate where the user device 305 is heading towards. For example, the SNR threshold used in the algorithm may be a value of 25 dB, 30 dB, 35 dB, 40 dB, or 45 dB. The threshold for switching wireless transceivers used in the algorithm may be a value of 20 dB. Additionally and/or alternatively, other values may also be used.

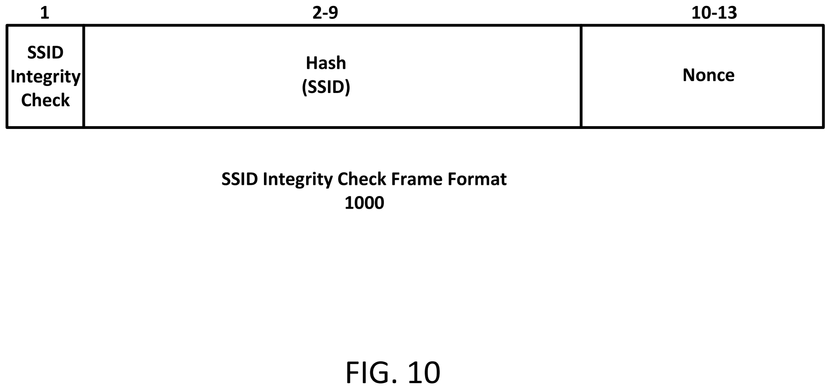

FIG. 10 shows an example beacon frame structure which includes SSID information. In some examples, the system controller 301 may authenticate a wireless transceiver. For example, the system controller 301 may verify whether a wireless transceiver is associated with a more preferred network service provider based on information of SSIDs broadcast by the wireless transceiver. With a mechanism in a beacon for authenticating a wireless transceiver, it may help identify spoofed wireless transceivers and providing enhanced security.

Currently, a wireless transceiver may periodically send out beacon frame according to a beacon frame structure to advertise the presence of the wireless transceiver in an area. Existing bits in the beacon frame structure may be used/re-used, or additional bits may be added to the beacon frame structure to include an SSID integrity check frame format 1000. For example, the first bit of the SSID integrity check frame format 1000 may contain information of "SSID integrity check". The second bit through the ninth bit of the SSID integrity check frame format 1000 may contain a hashed SSID (e.g., 8-bit hashed SSID). The tenth bit through the thirteenth bit of the SSID integrity check frame format 1000 may contain nonce (e.g., 4-bit nonce). The 4-bit nonce may be randomly generated, and further, may be periodically updated.

In some examples, the beacon broadcast by the wireless transceiver 314, for example, as shown in FIG. 9A and FIG. 9B, may support authentication if "SSID integrity check" of the SSID integrity check frame format 1000 within the beacon frame structure is set. The wireless transceiver 314 may combine the 4-bit nonce with the 8-bit hashed SSID, for example, the SSID 316 of FIG. 9A and FIG. 9B. The wireless transceiver 314 may further hash the total 12-bit information with a hashed algorithm that is agreed by a user device and a network service provider. The actions taken in steering the user device 305, as described with reference to FIG. 5, FIG. 6A, FIG. 6B, FIG. 6C, FIG. 6D, FIG. 9A, and FIG. 9B, may include the system controller 301 authenticating the wireless transceiver 314 based on the SSID integrity check information indicated by the beacon that the wireless transceiver 314 broadcasts.

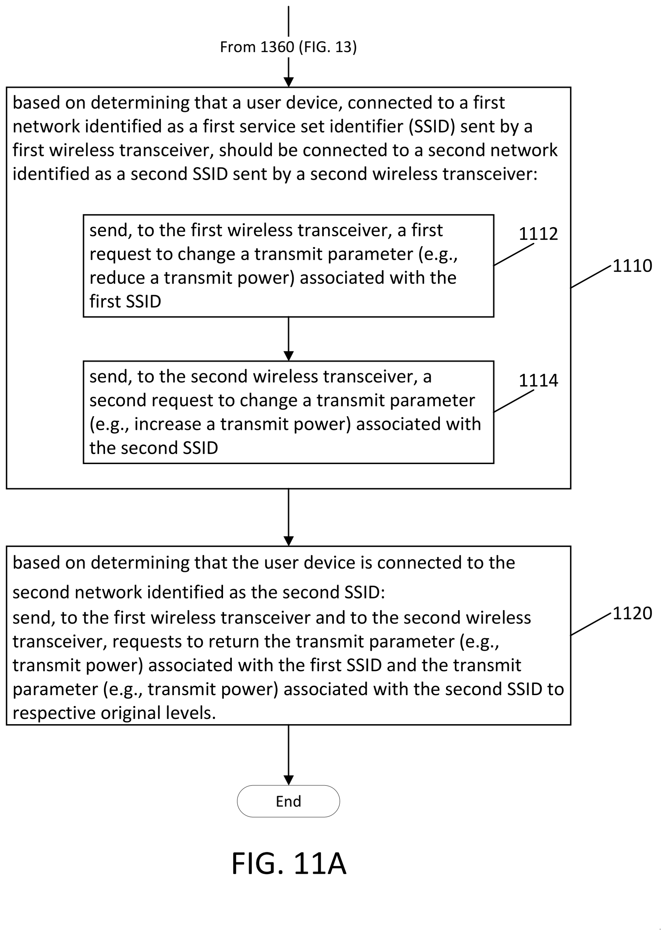

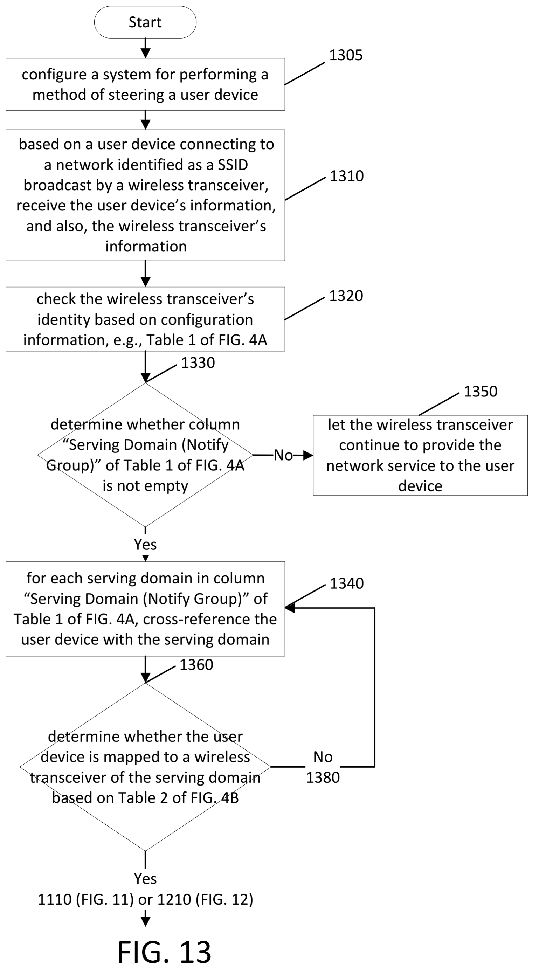

FIG. 11A is a flow chart showing an example method for steering a user device (the algorithm starts from FIG. 13, which will be described below). In some examples, a controller may change/adjust transmit parameters (e.g., transmit power, beamforming direction, and transmit interval) of one or more wireless transceivers if it determines that a user device is connected to one of the one or more wireless transceivers, and the one of the one or more wireless transceivers' coverage area overlaps with a defined serving domain covered by another one of the one or more wireless transceivers.

Step 1110 may include two steps, Step 1112 and Step 1114. Step 1112 and Step 1114 may be performed based on determining that a user device (e.g., the user device 305 as shown in FIG. 3), connected to a first network identified as a first SSID sent by a first wireless transceiver, should be connected to a second network identified as a second SSID sent by a second wireless transceiver.

The determination may be obtained from Step 1360, which will be further detailed below according to FIG. 13. In general, the determination may be based on user device's information obtained based on that the user device is connected to the first network identified as the first SSID. The determination may also be based on configuration information as described with reference to FIG. 4A and FIG. 4B.

The algorithm in FIG. 11A may be performed by the system controller 301 as shown in FIG. 3, any of the servers as shown in FIG. 1, the mobile device 125 as shown in FIG. 1, or any other computing devices. The user device may be the user device 305 as shown in FIG. 3. The first wireless transceiver may be the wireless transceiver 302 as shown in FIG. 3, and the first SSID may be the SSID 502 as shown in FIG. 5. The second wireless transceiver may be the wireless transceiver 314 as shown in FIG. 3, and the second SSID may be the SSID 316 as shown in FIG. 5.

At Step 1112, the controller may send, to the first wireless transceiver, a first request to change a transmit parameter of the first SSID to encourage the user device to disconnect from the first wireless transceiver. For example, the first request may ask the first wireless transceiver to reduce a transmission power of its SSID beacon, or to increase time between transmissions of its SSID beacon, or to use beamforming to steer the SSID beacon away from the user device's current location.

At Step 1114, the controller may send, to the second wireless transceiver, a second request to change a transmit parameter of the second SSID to encourage the user device to connect to the second wireless transceiver. For example, the second request may ask the second wireless transceiver to increase a transmission power of its SSID beacon, or to decrease a time between transmissions of its SSID beacon, or to use beamforming to steer its SSID beacon towards the user device.

At Step 1120, the step may be performed based on determining that the user device is connected to the second network identified as the second SSID. The controller may request the first wireless transceiver to return the transmit parameter of the first SSID to its original level. The controller may request the second wireless transceiver to return the transmit parameter of the second SSID to its original level.

In some examples, the transmit parameters may include transmit power and/or transmit intervals. The transmit parameters may include beamformed transmissions that are directed away from or towards a targeted user device. The transmit parameters may also include other types of parameters. These transmit parameters may be used in any combined forms.

For example, the first request sent by the controller at Step 1112 may include a request to reduce a transmit power of a beamformed transmission that is associated with the first SSID and directed to the user device. The second request sent by the controller at Step 1114 may include a request to increase a transmit power associated with the second SSID.

For example, the first request sent by the controller at Step 1112 may include a request to increase a time between beamformed transmissions that are associated with the first SSID and directed to the user device. The second request sent by the controller at Step 1114 may include a request to reduce a time between transmissions associated with the second SSID.

In some examples, the controller may also determine whether the user device should be connected to the second SSID sent by the second wireless transceiver, as shown at Step 1110, based on configuration information. The controller may also determine whether the user device should be connected to the second SSID sent by the second wireless transceiver, as shown at Step 1110, based on a congestion level of a network, free or paid services of a network, private or public services of a network. These parameters and/or criteria may be used in any combined forms.

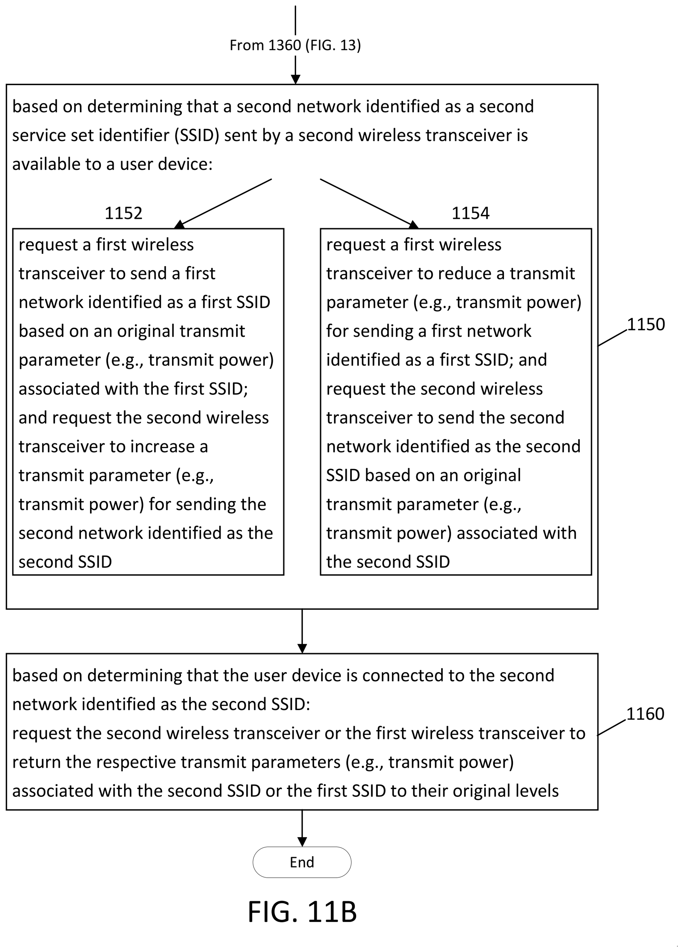

FIG. 11B is a flow chart showing an example method for steering a user device (the algorithm starts from FIG. 13, which will be described below). In some examples, a controller may change/adjust transmit parameters (e.g., transmit power, beamforming direction, and transmit interval) of one or more wireless transceivers if it determines that a user device is connected to one of the one or more wireless transceivers, and the one of the one or more wireless transceivers' coverage area overlaps with a defined serving domain covered by another one of the one or more wireless transceivers.

Step 1150 may include Step 1152 or Step 1154. Step 1152 and Step 1154 may be performed based on determining that a user device (e.g., the user device 305 as shown in FIG. 3), connected to a first network identified as a first SSID sent by a first wireless transceiver, should be connected to a second network identified as a second SSID sent by a second wireless transceiver.

At Step 1152, the controller may request the first wireless transceiver to send the first network identified as the first SSID based on an original transmit parameter (e.g., transmit power) associated with the first SSID. The controller may further request the second wireless transceiver to change a transmit parameter (e.g., to increase a transmit power) for sending the second network identified as the second SSID. As such, the controller may encourage the user device to disconnect from the first wireless transceiver and to connect to the second wireless transceiver.

At Step 1154, the controller may request the first wireless transceiver to change a transmit parameter (e.g., to reduce a transmit power) for sending the first network identified as the first SSID. The controller may further request the second wireless transceiver to send the second network identified as the second SSID based on an original transmit parameter (e.g., transmit power) associated with the second SSID. As such, the controller may encourage the user device to disconnect from the first wireless transceiver and to connect to the second wireless transceiver.

At Step 1160, the controller may request the second wireless transceiver or the first wireless transceiver to return the respective transmit parameters (e.g., transmit power) associated with the second SSID or the first SSID to their original levels based on determining that the user device is connected to the second network identified as the second SSID.

The other details of the example method of FIG. 11B, for example, an input for the algorithm of FIG. 11B, example transmit parameters, and/or example system controller/user device/first wireless transceiver/second wireless transceiver, are similar to those of the example method of FIG. 11A described herein.

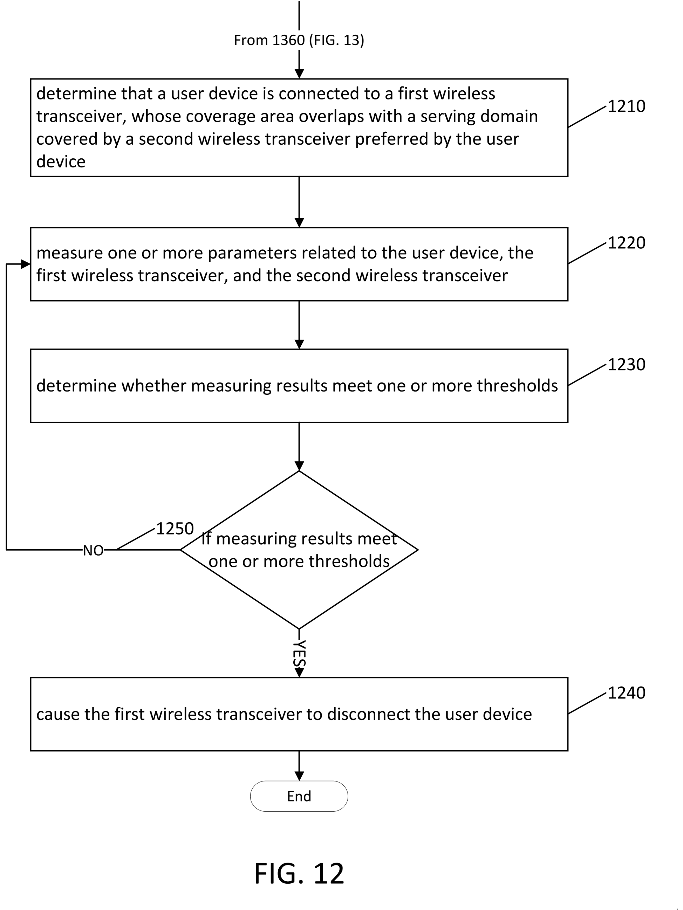

FIG. 12 is a flow chart showing an example method for steering a user device (the algorithm starts from FIG. 13, which will be described below). In some examples, a controller may cause a first wireless transceiver to disconnect a user device if it determines that the user device moves towards an area sufficiently covered by a second wireless transceiver that provides better security and user experience for a user of the user device.

At Step 1210, a controller (e.g., the system controller 301 as shown in FIG. 3) may determine that a user device (e.g., the user device 305 as shown in FIG. 3) is connected to a first wireless transceiver, whose coverage area overlaps with a defined serving domain covered by a second wireless transceiver more preferred by the user device.

The determination may be made according to FIG. 13 and obtained from Step 1360, which will be further detailed below. In general, the determination may be based on user device's information that is obtained if the user device is connected to the first wireless transceiver. The determination may also be based on configuration information as described with reference to FIG. 4A and FIG. 4B.

In some examples, the algorithm in FIG. 12 may be performed by the system controller 301 as shown in FIG. 3, any of the servers as shown in FIG. 1, the mobile device 125 as shown in FIG. 1, or any other computing devices. The user device may be the user device 305 as shown in FIG. 3. The first wireless transceiver may be a wireless transceiver 302 that broadcasts a SSID 502, as shown in FIG. 5. The second wireless transceiver may be a wireless transceiver 314 that broadcasts a SSID 316, as shown in FIG. 5.

At Step 1220, the controller may measure one or more parameters related to the user device, the first wireless transceiver, and the second wireless transceiver to collect information for tracking movements of the user device.

At Step 1230, the controller may determine whether measuring results meet one or more thresholds to decide whether the user device has reached an area that is sufficiently covered by the second wireless transceiver.

At Step 1240, the controller may cause, based on the measuring results meeting the one or more thresholds, the first wireless transceiver to disconnect the user device to encourage the user device to connect to a network provided by the second wireless transceiver.

At Step 1250, the controller may monitor, based on the measuring results not meeting the one or more thresholds, the one or more parameters related to the user device, the first wireless transceiver, and the second wireless transceiver to keep tracking the movements of the user device for deciding whether the user device would reach an area that is sufficiently covered by the second wireless transceiver. For example, the controller may repeat Step 1220 and Step 1230 to check whether the user device has reached an area that is sufficiently covered by the second wireless transceiver. The controller may also return to Step 1340 illustrated in FIG. 13, which will be detailed below, to check whether there is another wireless transceiver of another defined serving domain that is more preferred by the user device and is available for the user device.

The one or more parameters described herein may be the parameters described with reference to FIG. 9A. The one or more thresholds described herein may be the thresholds described with reference to FIG. 9A. For example, the user device's SNRs with respect to the first wireless transceiver at various positions may be used to determine whether the user device is moving away from the first wireless transceiver. The user device's response to directional beamforming performed by the first wireless transceiver or the second wireless transceiver at various positions may be used to determine which direction the user device is heading in. Based on these one or more parameters, the controller may determine when to steer the user device to a different network provided by the second wireless transceiver.

FIG. 13 is a flow chart showing an example method for steering a user device. In some examples, a controller, for example, the system controller 301 as shown in FIG. 3, may perform the method and determine whether a user device is mapped to a wireless transceiver of a defined serving domain, which overlaps with a coverage area of a wireless transceiver, to which the user device is connected. The method may also be performed by any of the servers as shown in FIG. 1, the mobile device 125 as shown in FIG. 1, or any other computing devices.

At Step 1305, actions may be taken to configure a system to perform the method for steering the user device. For example, Table 1 shown in FIG. 4A and Table 2 shown in FIG. 4B may be uploaded for a controller of the system to determine whether the user device, connected to a network (e.g., a network identified as 502) transmitted by a first wireless transceiver, may possibly receive a more preferred network (e.g., a network identified as 316) transmitted by a second wireless transceiver. For example, tables shown in FIGs. 7A, 7B, and 8 may be uploaded for the controller to adjust transmit parameters of the first and second wireless transceivers to encourage the user device to connect to the second wireless transceiver. For example, threshold values may be uploaded for the controller to track the user device's movements and to decide when to steer the user device to a different network transmitted by the second wireless transceiver.

At Step 1310, the controller may receive information of a user device, for example, the user device 305 as shown in FIG. 3, and information of a wireless transceiver, for example, the wireless transceiver 302 as shown in FIG. 3, if the user device 305 is connect to a network identified as an SSID, for example, the SSID 502 as shown in FIG. 5, which is broadcast by the wireless transceiver 302.

The information of the user device 305 may include an identity of the user device 305. The user device 305's information may also include other types of information. The information of the wireless transceiver 302 may include an identity of the wireless transceiver 302. The wireless transceiver 302's information may also include other types of information. The information may help the controller understand an up-to-date status of the user device. The information may also help the controller provide network services that fit the user device's individual needs.

At Step 1320, the controller may check the wireless transceiver 302's identity based on configuration information, as shown in FIG. 4A and FIG. 4B. For example, the controller may check the first column "Wireless Transceiver" of Table 1 shown in FIG. 4A to see whether the wireless transceiver 302 is listed. The controller may check the second column "Serving Domain (Notify Group)" of Table 1 shown in FIG. 4A to see whether there are any defined serving domains listed in the second column that overlap with coverages of the wireless transceivers listed in the first column.

At Step 1330, the controller may determine one or more defined serving domains, which overlap with the wireless transceiver 302's coverage area, to check whether the user device 305 may possibly receive a different network transmitted by a wireless transceiver of the one or more defined serving domains. In some examples, Table 1 of FIG. 4A shows that the defined serving domain 312 (e.g., serving Alice's home) and the defined serving domain 332 (e.g., serving a commercial place such as a restaurant) overlap with the wireless transceiver 302's coverage area. The controller may proceed with Step 1340.

At Step 1340, the controller may cross-reference the user device 305 with each of the defined serving domain 312 and the defined serving domain 332 (e.g., obtained at Step 1330) based on Table 1 of FIG. 4A to further check whether a different network provided by the defined serving domain 312 and/or the defined serving domain 332 is more preferred by the user device. For example, the controller may first cross-reference the user device 305 with the defined serving domain 332, which is obtained based on Table 1 of FIG. 4A.

In some examples, if the controller determines that there are no defined serving domains overlapping with the wireless transceiver 302's coverage area based on Table 1 of FIG. 4A at Step 1330 (e.g., the user device may not possibly receive a different network provided by a defined serving domain), the controller may proceed with Step 1350.

At Step 1350, the controller may let the wireless transceiver 302 continue to provide the network service to the user device 305. For example, the user device may remain connected to the network identified as SSID 502 broadcast by the wireless transceiver 302.

At Step 1360, based on the cross-referencing conducted at Step 1340, the controller may determine whether the user device 305 is mapped to a wireless transceiver of the defined serving domain 312 and/or to a wireless transceiver of the defined serving domain 332 so the controller may understand to which network (e.g., a network transmitted by a wireless transceiver of the defined serving domain 312 or by the defined serving domain 332) to steer the user device 305. For example, the controller may first determine whether the user device 305 is mapped to a wireless transceiver of the defined serving domain 332.

In some examples, Table 2 of FIG. 4B shows that the user device 305 is not mapped to a wireless transceiver (334 or 336) of the defined serving domain 332. Based on this finding, the controller may determine that the defined serving domain 332 does not provide a network more preferred by the user device 305, and proceed with Step 1380.

At Step 1380, the controller may repeat Step 1340 for cross-referencing the user device 305 with a defined serving domain, which overlaps with the wireless transceiver 302's coverage area, based on Table 1 shown in FIG. 4A. For example, the controller may cross-reference the user device 305 with the defined serving domain 312 (e.g., obtained at Step 1330).

The controller may further repeat Step 1360 for determining whether the user device 305 is mapped to a wireless transceiver of the defined serving domain based on Table 2 shown in FIG. 4B. For example, the controller may determine whether the user device 305 is mapped to a wireless transceiver of the defined serving domain 312.

In some examples, Table 2 of FIG. 4B shows that the user device 305 is mapped to the wireless transceiver 314 of the defined serving domain 312. Based on the finding, the controller may determine that the user device 305 prefers the wireless transceiver 314 of the defined serving domain 312, and accordingly, start to steer the user device 305 to a network transmitted by the wireless transceiver 314. A switch from the currently connected wireless transceiver 302 to the wireless transceiver 314 may enhance security and user experience for a user of the user device 305.

For example, the determination made at Step 1360 that the user device 305 prefers the wireless transceiver 314 may be provided as an input for the algorithms shown in FIGs. 11A, 11B, and 12 so that the controller may start to perform the method as described with reference to FIG. 11A, the method as described with reference to FIG. 11B, or the method as described with reference to FIG. 12. The controller may perform the method for steering the user device by changing transmit parameters of the wireless transceivers, as shown in FIG. 11A and FIG. 11B, if the controller determines that it is able to control the wireless transceivers, and/or changing transmit parameters of the wireless transceivers may not unnecessarily affect other devices within networks. The controller may perform the method for steering the user device by tracking movements of the user device, as shown in FIG. 12, if it determines just to focus on one user device without causing changes to any wireless transceivers or any other devices within networks.

The method of FIG. 11A, the method of FIG. 11B, and the method of FIG. 12 may be performed individually. The method of FIG. 11A, the method of FIG. 11B, and the method of FIG. 12 may be performed in a combined form, which may help the controller steer the user device to connect to one network or another network faster than an individual method of FIG. 11A, FIG. 11B, or an individual method of FIG. 12.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1: A method comprising: based on determining that a user device, connected to a first network identified as a first service set identifier (SSID) sent by a first wireless transceiver, should be connected to a second network identified as a second SSID sent by a second wireless transceiver: sending, by one or more computing devices and to the first wireless transceiver, a first request to reduce a transmit power associated with the first SSID; and sending, to the second wireless transceiver, a second request to increase a transmit power associated with the second SSID.

Clause 2: The method as described above in clause 1, wherein the first request comprises a request to reduce a transmit power of a beamformed transmission that is associated with the first SSID and directed to the user device.

Clause 3: The method as described above in clause 1, wherein the first request comprises a request to increase a time between beamformed transmissions that are associated with the first SSID and directed to the user device, and wherein the second request comprises a request to reduce a time between transmissions associated with the second SSID.

Clause 4: The method as described above in clause 1, further comprising: based on determining that the user device is connected to the second network identified as the second SSID: sending, to the first wireless transceiver and to the second wireless transceiver, requests to return the transmit power associated with the first SSID and the transmit power associated with the second SSID to respective original levels.

Clause 5: The method as described above in clause 1, wherein the first network identified as the first SSID is a public network, and the second network identified as the second SSID is a private network.

Clause 6: The method as described above in clause 1, wherein the determining that the user device, connected to the first network identified as the first SSID sent by the first wireless transceiver, should be connected to the second network identified as the second SSID sent by the second wireless transceiver is based on a determination that the user device is located within the first wireless transceiver's coverage area, which overlaps with a serving domain covered by the second wireless transceiver.

Clause 7: The method as described above in clause 1, wherein the determining is based on information of the user device and configuration information stored in the one or more computing devices, wherein the information of the user device is obtained based on the user device being connected to the first network identified as the first SSID, wherein the configuration information comprises a first table and a second table, wherein the first table comprises information of whether one or more serving domains overlap with one or more wireless transceivers' coverage areas, and wherein the second table comprises information of whether one or more user devices are mapped to wireless transceivers of respective serving domains of the one or more serving domains.

Clause 8: A method comprising: based on determining that a second network identified as a second service set identifier (SSID) sent by a second wireless transceiver is available to a user device: requesting, by one or more computing devices, a first wireless transceiver to send a first network identified as a first SSID based on an original transmit power associated with the first SSID; and requesting the second wireless transceiver to increase a transmit power for sending the second network identified as the second SSID.

Clause 9: The method as described above in clause 8, further comprising: requesting the first wireless transceiver to increase a time between beamformed transmissions that are associated with the first SSID and directed to the user device.

Clause 10: The method as described above in clause 8, further comprising: requesting the second wireless transceiver to reduce a time between transmissions associated with the second SSID for sending the second network identified as the second SSID.

Clause 11: The method as described above in clause 8, further comprising: based on determining that the user device is connected to the second network identified as the second SSID: requesting the second wireless transceiver to send the second network identified as the second SSID based on an original transmit power associated with the second SSID.

Clause 12: The method as described above in clause 8, wherein the first network identified as the first SSID is a public network, and the second network identified as the second SSID is a private network.

Clause 13: The method as described above in clause 8, wherein the determining that the second network identified as the second SSID sent by the second wireless transceiver is available to the user device, connected to the first network identified as the first SSID sent by the first wireless transceiver is based on a determination that the user device is located within the first wireless transceiver's coverage area, which overlaps with a serving domain covered by the second wireless transceiver.

Clause 14: The method as described above in clause 8, wherein the determining is based on information of the user device and configuration information stored in the one or more computing devices, wherein the information of the user device is obtained based on the user device being connected to the first network identified as the first SSID, wherein the configuration information comprises a first table and a second table, wherein the first table comprises information of whether one or more serving domains overlap with one or more wireless transceivers' coverage areas, and wherein the second table comprises information of whether one or more user devices are mapped to wireless transceivers of respective serving domains of the one or more serving domains.

Clause 15: A method comprising: receiving, by one or more computing devices, information indicating that a user device is connected to a first wireless transceiver; and requesting, based on configuration information indicating that a coverage area of the first wireless transceiver overlaps with a serving domain of a second wireless transceiver, and based on the configuration information indicating that the second wireless transceiver is more preferred by the user device, the first wireless transceiver to reduce a transmit power associated with a first service set identifier (SSID) identifying a first network.

Clause 16: The method as described above in clause 15, further comprising: requesting the first wireless transceiver to increase a time between transmissions associated with the first SSID.

Clause 17: The method as described above in clause 15, further comprising: based on determining that the user device is connected to the second wireless transceiver: requesting the first wireless transceiver to send the first network identified as the first SSID using an original transmit power associated with the first SSID.

Clause 18: The method as described above in clause 15, wherein the first network identified as the first SSID is a public network, and the second wireless transceiver broadcasts a private network identified as a second SSID.

Clause 19: The method as described above in clause 15, wherein the configuration information comprises a first table and a second table, wherein the first table comprises information of whether one or more serving domains overlap with one or more wireless transceivers' coverage areas, and wherein the second table comprises information of whether one or more user devices are mapped to wireless transceivers of respective serving domains of the one or more serving domains.

Clause 20: The method as described above in clause 15, further comprising: authenticating the second wireless transceiver based on a beacon associated with the second wireless transceiver.

Note that any of the above clauses may be implemented in a variety of ways. For example, any or all of the above clauses may be performed by a computing device comprising one or more processors and memory storing instructions that, when executed by the one or more processors, cause performance of the method of any of the preceding clauses. Such clauses might be implemented, in whole or in part, in a system, such that one or more computing devices perform one or more portions of a clause or clauses, whereas one or more different computing devices perform one or more different portion of the same or different clause or clauses. Additionally and/or alternatively, any or all of the above clauses may be performed by one or more non-transitory computer-readable media storing instructions that, when executed, cause the performance of one or more methods of the preceding clauses.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

## Claims

1. A method comprising:
based on determining that a user device, connected to a first network identified as a first service set identifier (SSID) sent by a first wireless transceiver, should be connected to a second network identified as a second SSID sent by a second wireless transceiver:
sending, by one or more computing devices and to the first wireless transceiver, a first request to reduce a transmit power associated with the first SSID; and
sending, to the second wireless transceiver, a second request to increase a transmit power associated with the second SSID.

2. The method of claim 1, wherein the first request comprises a request to reduce a transmit power of a beamformed transmission that is associated with the first SSID and directed to the user device.

3. The method of claim 1 or claim 2, wherein the first request comprises a request to increase a time between beamformed transmissions that are associated with the first SSID and directed to the user device, and
wherein the second request comprises a request to reduce a time between transmissions associated with the second SSID.

4. The method of any one of claims 1-3, further comprising:
based on determining that the user device is connected to the second network identified as the second SSID:
sending, to the first wireless transceiver and to the second wireless transceiver, requests to return the transmit power associated with the first SSID and the transmit power associated with the second SSID to respective original levels.

5. The method of any one of claims 1-4, wherein the first network identified as the first SSID is a public network, and the second network identified as the second SSID is a private network.

6. The method of any one of claims 1-5, wherein the determining that the user device, connected to the first network identified as the first SSID sent by the first wireless transceiver, should be connected to the second network identified as the second SSID sent by the second wireless transceiver is based on a determination that the user device is located within the first wireless transceiver's coverage area, which overlaps with a serving domain covered by the second wireless transceiver.

7. The method of any one of claims 1-6, wherein the determining is based on information of the user device and configuration information stored in the one or more computing devices,
wherein the information of the user device is obtained based on the user device being connected to the first network identified as the first SSID,
wherein the configuration information comprises a first table and a second table, wherein the first table comprises information of whether one or more serving domains overlap with one or more wireless transceivers' coverage areas, and wherein the second table comprises information of whether one or more user devices are mapped to wireless transceivers of respective serving domains of the one or more serving domains.

8. The method of any one of claims 1-7, further comprising:
based on determining that a third network identified as a third service set identifier (SSID) sent by a third wireless transceiver is available to a second user device:
requesting a fourth wireless transceiver to send a fourth network identified as a fourth SSID based on an original transmit power associated with the fourth SSID; and
requesting the third wireless transceiver to increase a transmit power for sending the third network identified as the third SSID.

9. The method of claim 8, further comprising:
requesting the fourth wireless transceiver to increase a time between beamformed transmissions that are associated with the fourth SSID and directed to the second user device.

10. The method of claim 8 or claim 9, further comprising:
requesting the third wireless transceiver to reduce a time between transmissions associated with the third SSID for sending the third network identified as the third SSID.

11. The method of any one of claims 8-10, further comprising:
based on determining that the second user device is connected to the third network identified as the third SSID:
requesting the third wireless transceiver to send the third network identified as the third SSID based on an original transmit power associated with the third SSID.

12. The method of any one of claims 8-11, wherein the fourth network identified as the fourth SSID is a public network, and the third network identified as the third SSID is a private network.

13. An apparatus comprising:
one or more processors; and
memory storing instructions that, when executed by the one or more processors, cause the performance of the method of any one of claims 1-12.

14. A system comprising:
a computing device configured to perform the method of any one of claims 1-12; and
the first wireless transceiver.

15. One or more non-transitory computer-readable media storing instructions that, when executed, cause the performance of the method of any one of claims 1-12.
